# EUROPÄISCHE PATENTSCHRIFT

(11) **EP 1 701 060 B1**
(45) Veröffentlichungstag und Bekanntmachung des Hinweises auf die Patenterteilung: **05.03.2008**
(21) Anmeldenummer: 06004677.8
(22) Anmeldetag: 08.03.2006
(51) Int. Cl.: F16G 13/16

(54) **Verbindungsbolzen für eine Energieführungskette**
Connecting pin for a power supply chain
Axe de jonction pour une chaîne porteuse pour lignes de transport d'énergie

(30) Priorität: 10.03.2005 DE 102005011515
(43) Veröffentlichungstag der Anmeldung: 13.09.2006
(73) Patentinhaber: Murrplastik Systemtechnik GmbH, 71570 Oppenweiler (DE)
(72) Erfinder:
(74) Vertreter: Reule, Hanspeter

(56) Entgegenhaltungen:
- GB-A- 1 568 376
- US-A- 4 271 663

## Beschreibung

Die Erfindung betrifft einen Verbindungsbolzen für eine Energieführungskette gemäß Oberbegriff des Anspruchs 1 sowie eine Energieführungskette gemäß Oberbegriff des Anspruchs 8.

Bekannte Energieführungsketten sind aus Kettengliedern aufgebaut, die aus zwei zueinander parallelen, durch Rahmenstege miteinander verbundenen Seitengliedern bestehen. Die Seitenwände der Energieführungskette werden durch zwei zueinander parallele Stränge von drehbeweglich miteinander verbundenen Seitengliedern gebildet. Die Seitenglieder weisen Verbindungslöcher auf. Zwei aufeinanderfolgende Seitenglieder werden so aneinandergefügt, dass ihre Verbindungslöcher kommunizieren, so dass ein Verbindungsbolzen von der Kettenaußenseite her durch sie hindurchgesteckt werden kann. Der Verbindungsbolzen hintergreift die Umfängsränder der Verbindungslöcher beider Seitenglieder, nämlich an der Kettenaußenseite mittels eines Bolzenkopfs und an der Ketteninnenseite mittels eines Rastelements, so dass diese drehbeweglich aneinandergefügt sind. Eine solche Energieführungskette mit einem solchen Verbindungsbolzen ist aus GB-A-1 568 376 bekannt. Zur Demontage der Energieführungskette müssen die Verbindungsbolzen aus den Verbindungslöchern entfernt werden. Dies geschieht dadurch, dass die Verbindungsbolzen wieder nach außen herausgedrückt werden. Hierzu muß jedoch in das Innere der Energieführungskette eingegriffen werden.

Es ist daher Aufgabe der Erfindung, eine Energieführungskette bzw. einen Verbindungsbolzen für eine Energieführungskette zu schaffen, die bzw. der eine einfachere Demontage der Verbindung der Seitenglieder ermöglicht.

Die Aufgabe wird durch einen Verbindungsbolzen gemäß Anspruch 1 und eine Energieführungskette gemäß Anspruch 8 gelöst. Vorteilhafte Weiterbildungen der Erfindung sind Gegenstand der abhängigen Ansprüche.

Der Erfindung liegt der Gedanke zugrunde, dass bei einer Drehbewegung des Verbindungsbolzens bezüglich der komplementären Anlagefläche am zweiten Seitenglied die Randfläche über die Anlagefläche gleitet und sich aufgrund ihrer schraubenförmig ansteigenden Oberfläche in einer Schraubenbewegung von der Anlagefläche abhebt. Eine Drehung des Verbindungsbolzens bewirkt somit, dass das Durchgriffselement ein Stück weit aus den Verbindungslöchern gezogen wird. Wenn sich der Kopf des Verbindungsbolzens ausreichend vom zweiten Seitenglied abgehoben hat, kann er ergriffen werden und der Verbindungsbolzen auf einfache Weise vollständig entfernt werden.

Die Randfläche kann eine über einen Winkel von 360° schraubenförmig ansteigende Oberfläche aufweisen. Es wird jedoch bevorzugt, dass die Randfläche mindestens zwei rotationssymmetrisch angeordnete Sektoren aufweist, die jeweils in Umfangsrichtung zum ersten Ende hin schraubenförmig ansteigende Oberflächen aufweisen. Das maximale Abheben des Kopfs vom zweiten Seitenglied erfolgt dann bereits bei einem Drehwinkel von 360° geteilt durch die Anzahl der Sektoren.

Das Rastelement ist zweckmäßig ein am ersten Ende des Durchgriffselements umlaufender Wulst. Um ein Einfügen in die Verbindungslöcher sowie ein Entfernen aus den Verbindungslöchern zu erleichtern, weist der Wulst vorteilhaft sowohl zum ersten Ende als auch zum zweiten Ende hin eine Einführschräge auf. Vorteilhafterweise ist das Durchgriffselement an einem Endabschnitt durch einen sich von seinem ersten Ende in axialer Richtung erstreckenden Schlitz in zwei Hälften geteilt. Beim Einfügen des Verbindungsbolzens in die Verbindungslöcher werden die Hälften gegeneinander zusammengedrückt und nehmen durch ihre elastische Rückstellkraft wieder ihre ursprüngliche Form ein, wenn das Rastelement den Umfangsrand des Verbindungslochs des ersten Seitenglieds hintergreift. Der Kopf weist zweckmäßig an seiner dem Durchgriffselement abgewandten Stirnfläche eine Eingriffsvertiefung für einen Schraubenzieher auf. Dadurch ist er auf einfache Weise verdrehbar, auch wenn der Kopf vollständig im zweiten Seitenglied versenkt ist.

Der Verbindungsbolzen ist vorteilhaft einstückig, vorzugsweise als Spritzgußteil aus Kunststoff, ausgebildet. Dadurch ist er besonders einfach herstellbar. Die Anlagefläche für den Kopf ist zweckmäßig an einer dem Ketteninneren abgewandten Außenseite des zweiten Seitenglieds angeordnet. Der Verbindungsbolzen wird dann von außen in die Verbindungslöcher eingeführt und kann auch von außen, ohne Zugriff in das Ketteninnere, wieder entfernt werden. Es wird besonders bevorzugt, dass die Stirnfläche des Kopfs mit der Außenfläche des zweiten Seitenglieds fluchtet. Die Energieführungskette weist dann keine zusätzlichen Kanten im Bereich des Verbindungsbolzens auf, was ihr auch ein ansprechenderes Design verleiht.

Im Folgenden wird die Erfindung anhand eines in der Zeichnung schematisch dargestellten Ausführungsbeispiels näher erläutert. Es zeigen
- Fig. 1a, 1b, 1c: drei Darstellungen eines Verbindungsbolzens aus unterschiedlichen Perspektiven;
- Fig. 2: eine Seitenansicht zweier aneinandergefügter Seitenglieder einer Energieführungskette und
- Fig. 3a, 3b: einen Schnitt entlang der Linie B-B aus Fig. 2 mit eingefügtem und entferntem Verbindungsbolzen.

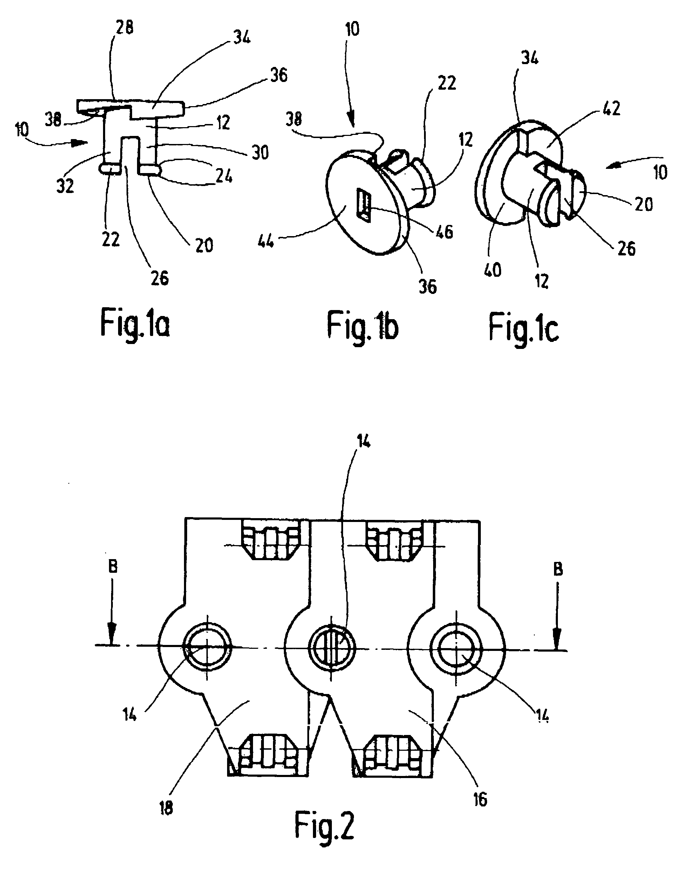

Ein Verbindungsbolzen 10 gemäß Fig. 1a, b, c weist ein Durchgriffselement 12 zum Durchgreifen von Verbindungslöchern 14 in Seitengliedern 16, 18 einer Energieführungskette auf. Das Durchgriffselement 12 weist eine zylindrische Außenkontur auf und trägt an seinem ersten Ende 20 einen umlaufenden Wulst 22. Der Wulst 22 dient als Rastelement zum Hintergreifen des Umfangsrands eines Verbindungslochs 14. Er weist sowohl an der dem ersten Ende 20 zugewandten Seite als auch an der dem ersten Ende 20 abgewandten Seite Einführschrägen 24 auf, die ein Einführen des Durchgriffselements 12 in ein Verbindungsloch 14 erleichtern. Vom ersten Ende 20 erstreckt sich ein Schlitz 26 in Richtung zum gegenüberliegenden zweiten Ende 28. Der Schlitz 26 verläuft durch die Mittelachse des Durchgriffselements 12 und teilt dieses über die Länge eines Endabschnitts in zwei Hälften 30, 32. Am zweiten Ende 28 ist am Durchgriffselement 12 ein Kopf 34 angeformt, der einen Rand 36 aufweist, der über die Außenkontur des Durchgriffselements 12 übersteht. Eine rings um das Durchgriffselement 12 verlaufende Randfläche 38 an der dem Durchgriffselement 12 zugewandten Seite des Kopfs 34 ist in zwei Sektoren 40, 42 unterteilt. Beide Sektoren 40, 42 weisen eine schraubenförmig in Richtung zum ersten Ende 20 hin ansteigende Oberfläche auf. Sie sind rotationssymmetrisch bezüglich der Mittelachse des Durchgriffselements 12 angeordnet. Der Kopf 34 weist an einer dem Durchgriffselement 12 abgewandten Stirnfläche 44 eine Eingriffsvertiefung 46 für einen Schraubenzieher auf.

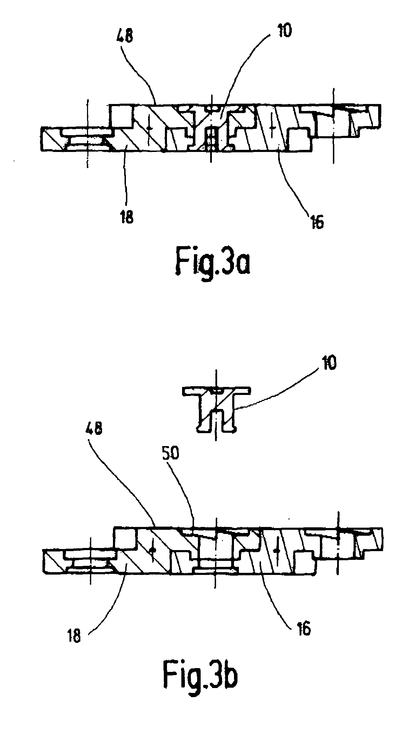

Zwei Seitenglieder 16, 18 einer Energieführungskette werden, wie in Fig. 2, 3a, 3b dargestellt, mittels des Verbindungsbolzens 10 miteinander verbunden. Ein erstes Seitenglied 16 wird so mit einem zweiten Seitenglied 18 zusammengefügt, dass ihre Verbindungslöcher 14 miteinander kommunizieren. Das zweite Seitenglied 18 weist an seiner dem Inneren der Energieführungskette abgewandten Außenseite um sein Verbindungsloch 14 herum eine komplementär zur Randfläche 38 ausgebildete Anlagefläche 50 auf, so dass der Kopf 34 formschlüssig im zweiten Seitenglied 18 aufgenommen werden kann. Die Stirnfläche 44 fluchtet mit der Außenfläche des zweiten Seitenglieds 18, so dass dessen Außenseite 48 eine glatte Oberfläche aufweist. Der Wulst 22 hintergreift den Umfangsrand des Verbindungslochs 14 im ersten Seitenglied 16, so dass beide Seitenglieder 16, 18 durch den Verbindungsbolzen 10 drehbeweglich zusammengehalten werden. Wird der Verbindungsbolzen 10 gegenüber dem zweiten Seitenglied 18 verdreht, so gleitet die Randfläche 38 auf der Anlage 50, so dass sich der Kopf 34 von der Außenseite 48 abhebt und das erste Ende 20 des Durchgriffselements 12 ein Stück weit in das Innere der Verbindungslöcher 14 gezogen wird. Der Verbindungsbolzen 10 kann dann leicht ergriffen und entfernt werden.

### Zusammenfassend ist folgendes festzuhalten:

Die Erfindung betrifft einen Verbindungsbolzen 10 für eine Energieführungskette mit einem Durchgriffselement 12 mit zylindrischer Außenkontur, an dessen erstem Ende 20 ein Rastelement 22 über die Außenkontur vorspringt und dessen zweites Ende 28 einen Kopf 34 mit einem über die Außenkontur des Durchgriffselements 12 überstehenden, rings umlaufenden Rand 36 trägt. Erfindungsgemäß ist vorgesehen, dass der Rand 36 an seiner dem Durchgriffselement 12 zugewandten Randfläche 38 wenigstens abschnittsweise eine in Umfangsrichtung zum ersten Ende hin schraubenförmig ansteigende Oberfläche aufweist.

## Patentansprüche

1. Verbindungsbolzen für eine Energieführungskette mit einem Durchgriffselement (12) mit zylindrischer Außenkontur, an dessen erstem Ende (20) ein Rastelement (22) über die Außenkontur vorspringt und dessen zweites Ende (28) einen Kopf (34) mit einem über die Außenkontur des Durchgriffselements (12) überstehenden, ringsumlaufenden Rand (36) trägt, **dadurch gekennzeichnet dass** der Rand (36) an seiner dem Durchgriffselement (12) zugewandten Randfläche (38) wenigstens abschnittsweise eine in Umfangsrichtung zum ersten Ende hin schraubenförmig ansteigende Oberfläche aufweist.

2. Verbindungsbolzen nach Anspruch 1, **dadurch gekennzeichnet, dass** die Randfläche (38) mindestens zwei rotationssymmetrisch angeordnete Sektoren (40, 42) aufweist, die jeweils in Umfangsrichtung zum ersten Ende (20) hin schraubenförmig ansteigende Oberflächen aufweisen.

3. Verbindungsbolzen nach Anspruch 1 oder 2, **dadurch gekennzeichnet, dass** das Rastelement (22) ein am ersten Ende (20) des Durchgrifsselements (12) umlaufender Wulst ist.

4. Verbindungsbolzen nach Anspruch 3, **dadurch gekennzeichnet, dass** der Wulst (22) sowohl zum ersten Ende (20) als auch zum zweiten Ende (28) hin eine Einführschräge (24) aufweist.

5. Verbindungsbolzen nach einem der vorangehenden Ansprüche, **dadurch gekennzeichnet, dass** das Durchgriffselement (12) an einem Endabschnitt durch einen sich von seinem ersten Ende (20) in axialer Richtung erstreckenden Schlitz (26) in zwei Hälften (30, 32) geteilt ist.

6. Verbindungsbolzen nach einem der vorangehenden Ansprüche, **dadurch gekennzeichnet, dass** der Kopf (34) an seiner dem Durchgriffselement (12) abgewandten Stirnfläche (44) eine Eingriffsvertiefung (46) für einen Schraubenzieher aufweist.

7. Verbindungsbolzen nach einem der vorangehenden Ansprüche, **dadurch gekennzeichnet, dass** er einstückig, vorzugsweise als Spritzgußteil aus Kunststoff, ausgebildet ist.

8. Energieführungskette mit mehreren aneinandergereihten Kettengliedern, die jeweils zwei miteinander verbundene, zueinander parallel angeordnete Seitenglieder (16, 18) aufweisen, wobei in Längsrichtung der Energieführungskette aufeinanderfolgende Seitenglieder (16, 18) gegeneinander verdrehbar miteinander verbunden sind, und wobei mindestens ein erstes (16) und ein auf das erste folgendes zweites Seitenglied (18) quer zur Längsrichtung verlaufende Verbindungslöcher aufweisen, die miteinander kommunizieren, **dadurch gekennzeichnet, dass** durch die Verbindungslöcher (14) zur Verbindung des ersten und des zweiten Seitenglieds (16, 18) ein Verbindungsbolzen (10) nach einem der vorangehenden Ansprüche gesteckt ist, dessen Rastelement (22) den Umfangsrand des Verbindungslochs (14) im ersten Seitenglied (16) und dessen Kopf (34) den Umfangsrand des Verbindungslochs (14) im zweiten Seitenglied (18) hintergreifen, und dass das zweite Seitenglied (18) um sein Verbindungsloch (14) herum eine komplementär zur Randfläche (38) ausgebildete Anlagefläche (50) für den Kopf (34) aufweist

9. Energieführungskette nach Anspruch 8, **dadurch gekennzeichnet, dass** die Anlagefläche (50) für den Kopf (34) an einer dem Ketteninneren abgewandten Außenseite (48) des zweiten Seitenglieds (18) angeordnet ist.

10. Energieführungskette nach Anspruch 9, **dadurch gekennzeichnet, dass** die Stirnfläche (44) des Kopfs (34) mit der Außenfläche des zweiten Seitenglieds (18) fluchtet.

## Claims

1. Connecting pin for a power supply chain, comprising a passage unit (12) with cylindrical outer contour, at whose first end (20) a locking element (22) protrudes over the outer contour and whose second end (28) supports a head (34) with an edge (36) that runs round and projects over the outer contour of the passage unit (12), **characterized in that** the edge (36) on its area (38) facing the passage unit (12), at least in sections, has a helically raised surface in a peripheral direction to the first end.

2. Connecting pin according to Claim 1, **characterized in that** the area (38) of the edge has at least two rotationally symmetrically arranged sectors (40, 42), which in each case have helically raised surfaces in a peripheral direction to the first end (20).

3. Connecting pin according to Claim 1 or 2, **characterized in that** the locking element (22) is a bulge running round the first end (20) of the passage unit (12).

4. Connecting pin according to Claim 3, **characterized in that** the bulge (22) has a lead-in slope (24) both at the first end (20) and at the second end (28).

5. Connecting pin according to any one of the preceding claims, **characterized in that** the passage unit (12), at one end section, is divided into two halves (30, 32) by a slot (26) extending from its first end (20) in an axial direction.

6. Connecting pin according to any one of the preceding claims, **characterized in that** the head (34) on its abutting face (44) turned away from the passage unit (12) has a groove (46) for a screwdriver.

7. Connecting pin according to any one of the preceding claims, **characterized in that** it is designed as an integral part, preferably as a plastic injection moulding.

8. Power supply chain with several chain links in line, which each have two parallel side members (16, 18) connected to each other, wherein successive side members (16, 18) are connected to each other in the longitudinal direction of the power supply chain, in order to be able to pivot against one another, and wherein at least a first (16) and a second side member (18) following the first have connecting holes running across the longitudinal direction, which communicate with one another, **characterized in that** a connecting pin (10), whose locking element (22) engages behind the peripheral edge of the connecting hole (14) in the first side member (16) and whose head (34) engages behind the peripheral edge of the connecting hole (14) in the second side member (18), according to any one of the preceding claims, is inserted through the connecting holes (14) for joining the first and the second side member (16, 18), and **in that** the second side member (18), around its connecting hole (14), has a contact area (50) for the head (34) formed complementary to the area (38) of the edge.

9. Power supply chain according to Claim 8, **characterized in that** the contact area (50) for the head (34) is arranged on an exterior side (48), turned away from the chain interior, of the second side member (18).

10. Power supply chain according to Claim 9, **characterized in that** the abutting face (44) of the head (34) is flush with the exterior area of the second side member (18).

## Revendications

1. Axe de liaison destiné à une chaîne de transmission d'énergie, muni d'un élément de pénétration (12) à profil extérieur cylindrique à la première extrémité (20) duquel un élément de crantage (22) dépasse au-delà du profil extérieur, et dont la seconde extrémité (28) porte une tête (34) dotée d'un rebord (36) à étendue périphérique annulaire, faisant saillie au-delà du profil extérieur dudit élément de pénétration (12), **caractérisé par le fait que** ledit rebord (36) possède au moins par zones, sur sa surface marginale (38) tournée vers l'élément de pénétration (12), une surface s'étendant hélicoïdalement vers le haut dans le sens périphérique, en direction de la première extrémité.

2. Axe de liaison selon la revendication 1, **caractérisé par le fait que** la surface marginale (38) comprend au moins deux secteurs (40, 42) agencés avec symétrie de révolution, qui sont respectivement munis de surfaces s'étendant hélicoïdalement vers le haut dans le sens périphérique, en direction de la première extrémité (20).

3. Axe de liaison selon la revendication 1 ou 2, **caractérisé par le fait que** l'élément de crantage (22) se présente comme un bourrelet périphérique au niveau de la première extrémité (20) de l'élément de pénétration (12).

4. Axe de liaison selon la revendication 3, **caractérisé par le fait que** le bourrelet (22) possède un biseau d'introduction (24) tant en direction de la première extrémité (20), qu'en direction de la seconde extrémité (28).

5. Axe de liaison selon l'une des revendications précédentes, **caractérisé par le fait que** l'élément de pénétration (12) est scindé en deux moitiés (30, 32), dans une région extrême, par une fente (26) s'étendant axialement à partir de sa première extrémité (20).

6. Axe de liaison selon l'une des revendications précédentes, **caractérisé par le fait que** la tête (34) comporte, sur sa face extrême (44) tournée à l'opposé de l'élément de pénétration (12), une creusure (46) de venue en prise d'un tournevis.

7. Axe de liaison selon l'une des revendications précédentes, **caractérisé par le fait qu'**il est réalisé d'un seul tenant, de préférence en tant que pièce venue d'injection en matière plastique.

8. Chaîne de transmission d'énergie comprenant plusieurs maillons alignés, respectivement dotés de deux organes latéraux (16, 18) qui sont reliés l'un à l'autre et agencés parallèlement l'un à l'autre, sachant que des organes latéraux (16, 18), se succédant dans la direction longitudinale de la chaîne de transmission d'énergie, sont reliés les uns aux autres avec faculté de rotation mutuelle, et sachant qu'au moins un premier organe latéral (16), et un second organe latéral (18) succédant audit premier organe, comportent des trous de liaison s'étendant transversalement vis-à-vis de la direction longitudinale et communiquant les uns avec les autres, **caractérisée par le fait qu'**un axe de liaison (10) selon l'une des revendications précédentes est emboîté à travers les trous de liaison (14), en vue de solidariser lesdits premier et second organes latéraux (16, 18), axe dont l'élément de crantage (22) emprisonne par-derrière le bord circonférentiel du trou de liaison (14) pratiqué dans le premier organe latéral (16), et dont la tête (34) emprisonne par-derrière le bord circonférentiel du trou de liaison (14) pratiqué dans le second organe latéral (18) ; et **par le fait que** ledit second organe latéral (18) possède, tout autour de son trou de liaison (14), une surface de contact (50) assignée à ladite tête (34), et dont la réalisation est complémentaire de celle de la surface marginale (38).

9. Chaîne de transmission d'énergie selon la revendication 8, **caractérisée par le fait que** la surface de contact (50), assignée à la tête (34), se trouve sur une face extérieure (48) du second organe latéral (18) qui est tournée à l'opposé de l'espace interne de ladite chaîne.

10. Chaîne de transmission d'énergie selon la revendication 9, **caractérisée par le fait que** la face extrême (44) de la tête (34) coïncide avec la surface extérieure du second organe latéral (18).
